# EUROPÄISCHE PATENTSCHRIFT

(11) **EP 1 366 114 B1**
(45) Veröffentlichungstag und Bekanntmachung des Hinweises auf die Patenterteilung: **19.04.2006**
(21) Anmeldenummer: 02722153.0
(22) Anmeldetag: 27.02.2002
(51) Int. Cl.: C08K 13/02, C08K 3/24, C08K 5/36

(54) **STABILISATORZUSAMMENSETZUNG FÜR HALOGENIERTE POLYMERE, DEREN VERWENDUNG UND SOLCHE ZUSAMMENSETZUNGEN ENTHALTENDE POLYMERE**
STABILIZER COMPOSITIONS FOR HALOGENATED POLYMERS, THE USE THEREOF AND POLYMERS CONTAINING SAID COMPOSITIONS
COMPOSITION DE STABILISANT POUR POLYMERES HALOGENES, SON UTILISATION, ET POLYMERES CONTENANT DE TELLES COMPOSITIONS

(30) Priorität: 27.02.2001 DE 10109366
(43) Veröffentlichungstag der Anmeldung: 03.12.2003
(73) Patentinhaber: Baerlocher GmbH, 85716 Unterschleissheim (DE)
(72) Erfinder: HAUK, Jürgen, 85354 Freising (DE); FOKKEN, Stefan, 85244 Biberbach (DE)
(74) Vertreter: Fiesser, Gerold Michael
(86) Internationale Anmeldenummer: PCT/EP2002/002115
(87) Internationale Veröffentlichungsnummer: WO 2002/068526

(56) Entgegenhaltungen:
- EP-A- 1 046 668
- US-A- 5 519 077

## Beschreibung

Die vorliegende Erfindung betrifft Stabilisatorzusammensetzungen für halogenierte Polymere, Polymerzusammensetzungen die derartige Stabilisatorzusammensetzungen enthalten sowie Formkörper, die unter Verwendung der beschriebenen Stabilisatorzusammensetzungen oder Polymerzusammensetzungen hergestellt werden.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird woraus ein verfärbter, ungesättigter Kunststoff mit farbgebenden Polyensequenzen resultiert.

Besonders problematisch wirkt sich dabei aus, daß halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen fuhren. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es zu den obengenannten Zersetzungsreaktionen kommen, wodurch die im Extruder befindliche Charge unbrauchbar wird und der Extruder gegebenenfalls geschädigt wird.

Weiterhin neigen Polymere, die einer derartigen Zersetzung unterworfen sind dazu, Anhaftungen an den Verarbeitungsanlagen zu bilden, die nur schwierig wieder zu entfernen sind. Die genannten Probleme werden üblicherweise durch den Einsatz von Stabilisatoren gelöst, die dem halogenhaltige Polymeren vor oder während der Verarbeitung zugegeben werden. Zu derartigen, bekannten Stabilisatoren zählen beispielsweise die Blei-Stabilisatoren, Barium-Stabilisatoren, Cadmium-Stabilisatoren, Organozinn-Stabilisatoren sowie Barium-Cadmium-, Barium-Zink- oder Calcium-Zink-Stabilisatoren.

Neben den hier geschilderten Problemen, die in einer frühen Phase der Herstellung von Formkörpern aus halogenhaltigen Polymeren auftreten, sind jedoch für die Gebrauchseigenschaften eines derartigen Formkörpers über einen längeren Zeitraum Farbstabilität und möglichst unveränderte Materialeigenschaften wichtig. Insbesondere bei Formkörpern, die Licht, wechselnden Temperaturen oder anderen äußeren Einflüssen ausgesetzt sind, kommt es mit zunehmender Gebrauchsdauer zu Veränderungen der Farbe und der Materialeigenschaften, die gegebenenfalls bis zur Unbrauchbarkeit des Formkörpers fortschreiten.können.

Die Verwendung der aus dem Stand der Technik bekannten, schwermetallhaltigen Stabilisatoren stößt jedoch bei der verarbeitenden Industrie und beim Anwender aus verschiedenen Gründen auf Ablehnung.

Um dem Problem der Anfangsfarbe und dem Problem der Farbstabilität entgegenzuwirken, wurden in der Vergangenheit organische Stabilisatorkombinationen eingesetzt, die zum einen während der Verarbeitungsphase zum Formkörper und zum anderen im Langzeitgebrauch den Veränderungen von Farbe und Materialeigenschaften entgegenwirken sollen.

So beschreibt beispielsweise die FR-A 2 491 480 eine Stabilisatorkombination, die ein Dihydropyridin und ein Derivat der Aminocrotonsäure enthält. Problematisch wirkt sich bei der beschriebenen Stabilisatorkombination aus, daß ihre Wirkung im Hinblick auf die Anfangsfarbe während der Verarbeitung zu wünschen übrig läßt.

Die DE-A 1 569 056 betrifft eine stabilisierte Formmasse. Beschrieben wird eine Formmasse, die aus einem Polymerisat oder Mischpolymerisat des Vinylchlorids und einer Stabilisatorkombination aus einem mono- oder diaromatisch substituierten Harnstoff oder Thioharnstoff und einem organischen Phosphit besteht. Die Stabilisatorkombination kann weiterhin noch Magnesiumoxid oder Magnesiumstearat enthalten. Problematisch wirkt sich bei der beschriebenen Formmasse jedoch aus, daß ihre Farbstabilität zu wünschen übrig läßt.

Die deutsche Patentschrift 746 081 betrifft ein Verfahren zur Verbesserung der Hitzebeständigkeit von hochpolymeren halogenhaltigen Stoffen. Beschrieben wird die Stabilisierung von halogenhaltigen Polymeren mit alkalisch wirkenden Mitteln zusammen mit Aminen oder Carbamiden, die ein bewegliches, durch Alkali ersetzbares Wasserstoffatom besitzen. Problematisch wirkt sich bei dem beschriebenen Verfahren jedoch aus, daß die Anfangsfarbe der beschriebenen hochpolymeren halogenhaltigen Stoffe zu wünschen übrig läßt. Außerdem verlieren die beschriebenen Stabilisatoren bei Temperaturen oberhalb von 160°C ihre Wirkung.

Die DE-C 36 36 146 betrifft ein Verfahren zur Stabilisierung chlorhaltiger Harze. Bei dem beschriebenen Verfahren werden einem polymerisierten Harz ein Aminocrotonsäureester und eine metallionenfreie Epoxyverbindung zugesetzt. Nachteilig wirkt sich bei dem beschriebenen Verfahren jedoch aus, daß die Anfangsfarbe der Harze gehobenen Anforderungen nicht entspricht.

Die DE-C 26 49 924 betrifft ein antistatisches Schuhwerk. Beschrieben wird eine Außensohle für ein Schuhwerk, die aus einem Vinylchloridderivat besteht und ein nichtionisches antistatisches Mittel, ein ionisches antistatisches Mittel und einen nichtmetallischen Stabilisator enthält. Als Kombinationen werden insbesondere Derivate der Aminocrotonsäure zusammen mit quaternären Ammoniumkomplexen, Alkylbenzolsulfonat oder Triäthanolaminalkylsulfat und Estern der Caprylsäure eingesetzt. Nachteilig wirkt sich bei den beschriebenen Zusammensetzungen jedoch die Tatsache aus, daß sie bereits im Hinblick auf die Anfangsfarbe der mit solchen Zusammensetzungen stabilisierten halogenhaltigen Kunststoffe keine gute Wirkung zeigen.

Die JP63010648 (Adeka Argus Chem. Co. Ltd.) betrifft ein PVC-Harz, das durch Vermischen von PVC-Harz, einem Glycidylacrylatharz und einer stickstofehaltigen Verbindung erhältlich ist. Als geeignete stickstoffhaltige Verbindungen werden beispielsweise Hydroxyether der Aminocrotonsäure, Dihydropyridine und Harnstoffverbindungen beschrieben. Die beschriebenen Zusammensetzungen zeigen jedoch mangelnde Stabilisierung im Hinblick auf die Anfangsfarbe und genügen im Hinblick auf die Farbhaltung keinen hohen Ansprüchen.

Die EP-A 1 046 668 betrifft Stabilisatorkombinationen für chlorhaltige Polymere. Beschrieben werden Kombinationen aus 6-Aminouracilderivaten und mindestens einer weiteren Verbindung ausgewählt aus der Gruppe bestehend aus Perchlorat-Verbindungen, Glycidylverbindungen, β-Diketonen, β-Ketoestern, Dihydropyridinen, Polydihydropyridinen, sterisch gehinderten Aminen, Alkalialumosilikaten, Hydrotalciten, Alkali- und Erdalkalihydroxiden, Alkali- und Erdalkalicarbonaten oder -carboxylaten, Antioxidantien und Gleitmitteln sowie Organozinn-Stabilisatoren. Nachteilig wirkt sich bei den beschriebenen Kombinationen jedoch eine mangelnde UV-Stabilität der Stabilisatorkombinationen im Rahmen ihres Einsatzes aus.

Die US-A 5,464,892 betrifft eine PVC-Harzzusammensetzung, die als Stabilisator ein Perchlorat und ein Metallcarboxylat enthält. Nachteilig wirkt sich bei den beschriebenen Zusammensetzungen die mangelnde Stabilisierung im Hinblick auf die Anfangsfarbe aus.

Die US-A, 5,872,166 betrifft PVC-Stabilisatoren die eine überbasische Mischung von Salzen unsubstituierter oder alkylsubstituierter Benzoesäuren gegebenenfalls mit einer oder mehreren aliphatischen Fettsäuren, einem Carbonat- oder Silikatstabilisator und gegebenenfalls einem oder mehreren Polyolen mit 2 bis 10 OH-Gruppen, enthalten. Nachteilig wirkt sich bei dem beschriebenen Stabilisator jedoch die mangelnde Stabilisierung im Hinblick auf die Anfangsfarbe aus.

Die EP 0 962 491 A1 betrifft den Einsatz von Cyanacetylharnstoffen zum Stabilisieren von halogenhaltigen Polymeren. Problematisch wirkt sich bei den beschriebenen Cyanacetylharnstoffen aus, dass sie durch die Zahl der Syntheseschritte bei ihrer Herstellung ökonomische und ökologische Nachteile aufweisen.

Es bestand daher ein Bedürfnis nach einer Stabilisatorkombination für halogenierte Polymere, die frei von Schwermetallen ist und trotzdem eine ausgezeichnete Anfangsfarbe und Farbstabilität bewirkt. Ein besonderes Bedürfnis bestand nach einer Stabilisatorkombination, die bei der Herstellung von Formkörpern aus halogenhaltigen Polymeren eine gute Anfangsfarbe gewährleistet und die auch bei kurzzeitigen Produktionsunterbrechungen und einer damit einhergehenden höheren thermischen Belastung des Werkstoffs erhalten bleibt. Weiterhin bestand ein Bedürfnis nach einer Stabilisatorkombination, die auch eine gute Farbhaltung im Langzeitgebrauch eines aus einem halogenhaltigen Polymeren hergestellten Formkörpers ermöglicht.

Der vorliegenden Erfindung lag damit die Aufgabe zugrunde, Stabilisatorkombinationen für halogenhaltige Polymere zur Verfügung zustellen, welche die obengenannten Bedürfnisse befriedigen. Weiterhin lag der vorliegenden Erfindung die Aufgabe zugrunde, ein Verfahren zur Stabilisierung halogenhaltiger Polymerer zur Verfügung zustellen. Darüber hinaus lag der vorliegenden Erfindung die Aufgabe zugrunde, Polymerzusammensetzungen zur Verfügung zu stellen, welche eine gute Anfangsfarbe und eine gute Farbstabilität aufweisen.

Die der Erfindung zugrundeliegenden Aufgaben werden durch eine Stabilisatorzusammensetzung, ein Verfahren zur Stabilisierung halogenhaltiger Polymerer und eine Polymerzusammensetzung gelöst, wie sie im nachfolgenden Text beschrieben sind.

Gegenstand der vorliegenden Erfindung ist eine Stabilisatorzusammensetzung, mindestens enthaltend eine Verbindung, die ein mercaptofunktionelles sp²-hybridisiertes C-Atom aufweist, wobei es sich bei der Verbindung mit einem mercaptofunktionellen sp²-hybridisiertes C-Atom nicht um einen Cyanacetylharnstoff handelt, und ein halogenhaltiges Salz einer Oxysäure.

Ein weiterer Gegenstand der vorliegenden Erfindung ist eine Stabilisatorzusammensetzung, mindestens enthaltend eine Verbindung, die ein mercaptofunktionelles sp²-hybridisiertes C-Atom aufweist und ein halogenhaltiges Salz einer Oxysäure oder ein Carbazol oder mindestens ein Carbazolderivat oder 2,4-Pyrrolidindion oder mindestens ein 2,4-Pyrrolidindion-Derivat oder mindestens eine Verbindung mit einem Strukturelement der allgemeinen Formel I 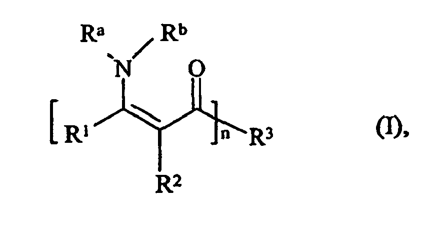 worin n für eine Zahl von 1 bis 100.000, die Reste R^{a}, R^{b}, R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl-oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptoeycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR^{a} oder CH₂C(O) mit dem in Klammern stehenden Strukturelement verbunden ist, steht oder der Rest R³ mit dem Rest R¹ so verbunden ist, daß insgesamt ein gegebenenfalls substituiertes, gesättigtes oder ungesättigtes heterocyclisches Ringsystem mit 4 bis 24 C-Atomen gebildet wird, wobei der Rest R¹ in einem Ringsystem mit R³ nicht für NH oder NR^{a} steht, oder ein Gemisch aus zwei oder mehr der genannten Verbindungen.

Unter einer "Stabilisatorzusammensetzung" wird im Rahmen der vorliegenden Erfindung eine Zusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich eine erfindungsgemäße Stabilisatorzusammensetzung dem zu stabilisierenden, halogenhaltigen Polymeren während der Verarbeitung beizumischen.

Eine erfindungsgemäße Stabilisatorzusammensetzung weist mindestens zwei Bestandteile auf. Als einen ersten Bestandteil enthält eine erfindungsgemäße Stabilisatorzusammensetzung mindestens eine Verbindung, die mindestens ein mercaptofunktionelles, sp²-hybridisiertes C-Atom aufweist, beispielsweise Thioharnstoff oder ein Thioharnstoffderivat.

Als Verbindungen, die mindestens ein mercaptofunktionelles, sp²-hybridisiertes C-Atom aufweisen eignen sich im Rahmen der vorliegenden Erfindung grundsätzlich alle Verbindungen, die ein Strukturelement Z=CZ-SH oder ein Strukturelement Z₂C=S aufweisen, wobei beide Strukturelemente tautomere Formen einer einzigen Verbindung sein können. Das sp²⁻hybridisierte C-Atom kann dabei Bestandteil einer gegebenenfalls substituierten aliphatischen Verbindung oder Bestandteil eines aromatischen Systems sein. Geeignete Verbindungstypen sind beispielsweise 1 hiocarbamidsäurrüerivate, Thiocarbamate, Thiocarbonsäuren, Tbiobenzoesäurederivate, Thioacetonderivate oder Thioharnstoffoder Thioharnstoffderivate.

Wenn eine erfindungsgemäße Stabilisatorzusammensetzung außer einer Verbindung, die mindestens ein mercaptofunktionelles, sp²-hybridisiertes C-Atom aufweist und einem Salz einer halogenhaltigen Oxysäure keine Verbindung aus der Gruppe bestehend aus Carbazolen oder Carbazolderivaten oder 2,4-Pyrrolidindionen oder ein 2,4-Pyrrolidindion-Derivaten oder Verbindungen mit einem Strukturelement der allgemeinen Formel 1 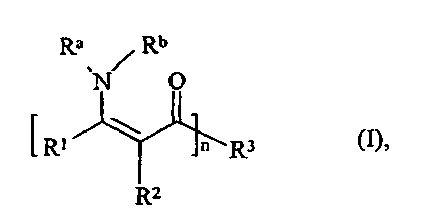 worin n für eine Zahl von 1 bis 100.000, die Reste R^{a}, R^{b}, R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoallcylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR^{a} oder CH₂C(O) mit dem in Klammem stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, wobei der Rest R¹ in einem Ringsystem mit R³ nicht für NH oder NR^{a} steht, oder ein Gemisch aus zwei oder mehr der genannten Verbindungen aufweist, so enthält die Stabilisatorzusammensetzung als Verbindung, die mindestens ein mereaptofunktionelles, sp²-hybridisiertes C-Atom aufweist keine Verbindung aus der Klasse der Cyanacetylharnstoffe, insbesondere keine Cyanacetylharnstoffe wie sie in der EP 0 962 49I AI beschrieben werden.

Im Rahmen einer bevorzugten Ausführungsform der vorliegenden Erfindung wird als Verbindung mit mindestens einem mercaptomnktionellen, sp²-hybridisierten C-Atom Thioharnstoff oder ein Thioharnstoffderivat eingesetzt.

Unter einem Thioharnstoffderivat wird im Rahmen der vorliegenden Erfindung eine Verbindung der allgemeinen Formel II 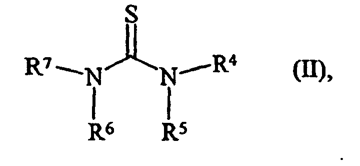 verstanden, worin die Reste R⁴ bis R⁷ jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen, einen gegebenenfalls substituierten Aralkylrest mit 7 bis 44 C-Atomen oder einen linearen oder verzweigten, gesättigten oder ungesättigten, gegebenenfalls substituierten Acylrest mit 1 bis 24 C-Atomen stehen, oder jeweils zwei der Reste R⁴ und R⁵ oder R⁶ und R⁷ paarweise einen gesättigten oder ungesättigten, gegebenenfalls substituierten Cyclus mit 4 bis etwa 10 C-Atomen bilden oder jeweils zwei der Reste R⁷ und R⁴ oder R⁷ und R⁵ oder R⁶ und R⁴ oder R⁶ und R⁵ einen gesättigten oder ungesättigten, gegebenenfalls substituierten Homo- oder Heterocyclus mit 2 bis etwa 10 C-Atomen bilden, wobei in den vorgenannten Fällen die jeweils nicht an der Cyclusbildung beteiligten Reste jeweils unabhängig voneinander für Wasserstoff, einen linearen oder verzweigten, gesättigten oder ungesättigten, gegebenenfalls substituierten Alkylrest mit 1 bis 24 C-Atomen, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen können und die an der Cyclusbildung beteiligten Reste nicht über -C(O)-Gruppen an das Stickstoffatom gebunden sind.

Im Rahmen einer bevorzugten Ausführungsform enthält eine erfindungsgemäße Stabilisatorzusammensetzung Thioharnstoff oder ein Thioharnstoffderivat, insbesondere ein an einem oder beiden Stickstoffatomen mit sterisch anspruchsvollen aliphatischen, cycloaliphatischen oder aromatischen Substituenten ausgestattetes Thioharnstoffderivat.

Es ist im Rahmen der vorliegenden Erfindung daher bevorzugt, wenn eine erfindungsgemäße Stabilisatorzusammensetzung mindestens eine Verbindung der allgemeinen Formel II aufweist, in der mindestens einer der Reste R⁴ bis R⁷ für einen Arylrest mit mindestens 6 C-Atomen steht und mindestens einer der Reste R⁴ bis R⁷ für Wasserstoff steht. Im Rahmen einer besonders bevorzugten Ausführungsform der vorliegenden Erfindung enthält eine erfindungsgemäße Stabilisatorzusammensetzung mindestens eine Verbindung der allgemeinen Formel II, in der einer der Reste R⁴ oder R⁵ und einer der Reste R⁶ oder R⁷ für einen Arylrest mit mindestens 6 C-Atomen steht.

Im Rahmen einer besonders bevorzugten Ausführungsform der vorliegenden Erfindung enthält eine erfindungsgemäße Stabilisatorzusammensetzung beispielsweise Thioharnstoff, Phenylthioharnstoff oder N,N'-Diphenylthioharnstoff oder deren Gemisch.

Es ist im Rahmen der vorliegenden Erfindung vorgesehen, daß eine erfindungsgemäße Stabilisatorzusammensetzung nur eine Verbindung der allgemeinen Formel II aufweist. Es ist jedoch erfindungsgemäß ebenso möglich, daß eine erfindungsgemäße Stabilisatorzusammensetzung ein Gemisch aus zwei oder mehr der obengenannten Verbindungen der allgemeinen Formel II aufweist.

Eine erfindungsgemäße Stabilisatorzusammensetzung enthält vorzugsweise mindestens etwa 0,1 Gew.-% Thioharnstoff oder Thioharnstoffderivate. Die Obergrenze für den Gehalt an den genannten Verbindungen liegt bei etwa 80 Gew.-%, vorzugsweise jedoch bei höchstens etwa 30 Gew.-%. Im Rahmen einer bevorzugten Ausführungsform der vorliegenden Erfindung enthält eine erfindungsgemäße Stabilisatorzusammensetzung etwa 1 bis etwa 25, beispielsweise etwa 3 bis etwa 15 oder etwa 5 bis etwa 10 Gew.-% Thioharnstoff oder Thioharnstoffderivate, insbesondere Phenylthioharnstoff oder N,N'-Diphenylthioharnstoff oder deren Gemisch.

Im Rahmen einer weiteren Ausführungsform der vorliegenden Erfindung enthält eine erfindungsgemäße Stabilisatorzusammensetzung als Verbindung mit mindestens einem mercaptofunktionellen sp2-hybridisierten C-Atom ein Mercaptobenzimidazol oder ein Mercaptobenzimidazolderivat der allgemeinen Formel VII 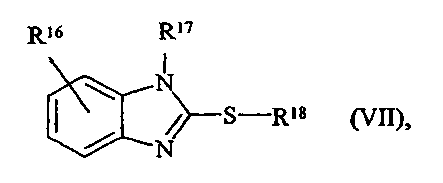 worin die Reste R¹⁶ und R¹⁷ jeweils unabhängig voneinander für Wasserstoff, einen linearen oder verzweigten, gesättigten oder ungesättigten, gegebenenfalls substituierten Alkylrest mit 1 bis 24 C-Atomen oder einen linearen oder verzweigten, gesättigten oder ungesättigten, gegebenenfalls substituierten Acylrest mit 2 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen und der Rest R¹⁸ für Wasserstoff steht.

Im Rahmen einer bevorzugten Ausführungsform der vorliegenden Erfindung enthält eine erfindungsgemäße Stabilisatorzusammensetzung eine Verbindung der allgemeinen Formel VII, worin R¹⁶ für H oder F und R¹⁷ für H oder C₁₆₋₁₈-Acyl steht.

Wenn eine erfindungsgemäße Stabilisatorzusammensetzung eine Verbindung der allgemeinen Formel VII oder ein Gemisch aus zwei oder mehr solcher Verbindungen enthält, so beträgt der Anteil dieser Verbindung oder dieser Verbindungen an der gesamten Stabilisatorzusammensetzung etwa 0,1 bis etwa 50 Gew.-%, vorzugsweise etwa 1 bis etwa 20 Gew.-%.

Im Rahmen einer bevorzugten Ausführungsform der vorliegenden Erfindung enthält eine erfindungsgemäße Stabilisatorzusammensetzung, die eine Verbindung der allgemeinen Formel VII enthält, keine weiteren Stabilisatoren die Zinn oder Blei enthalten.

Im Rahmen einer weiteren Ausführungsform der vorliegenden Erfindung enthält eine erfindungsgemäße Stabilisatorzusammensetzung als Verbindung mit mindestens einem sp2-hybridisierten C-Atom ein Mercaptobenzothiazol oder ein Mercaptobenzothiazolderivat der allgemeinen Formel VIII 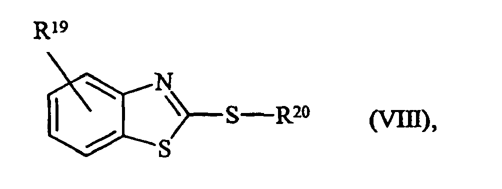 worin der Rest R¹⁹ jeweils unabhängig voneinander für Wasserstoff, einen linearen oder verzweigten, gesättigten oder ungesättigten, gegebenenfalls substituierten Alkylrest mit 1 bis 24 C-Atomen oder einen linearen oder verzweigten, gesättigten oder ungesättigten, gegebenenfalls substituierten Acylrest mit 2 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen und der Rest R²⁰ für Wasserstoff steht.

Im Rahmen einer bevorzugten Ausführungsform der vorliegenden Erfindung enthält eine erfindungsgemäße Stabilisatorzusammensetzung eine Verbindung der allgemeinen Formel VIII, worin R¹⁹ für H oder F steht.

Wenn eine erfindungsgemäße Stabilisatorzusammensetzung eine Verbindung der allgemeinen Formel VIII oder ein Gemisch aus zwei oder mehr solcher Verbindungen enthält, so beträgt der Anteil dieser Verbindung oder dieser Verbindungen an der gesamten Stabilisatorzusammensetzung etwa 0,1 bis etwa 50 Gew.-%, vorzugsweise etwa 1 bis etwa 20 Gew.-%.

Im Rahmen einer weiteren Ausführungsform der vorliegenden Erfindung enthält eine erfindungsgemäße Stabilisatorzusammensetzung eine Thiocarbamidsäure der allgemeinen Formel IX 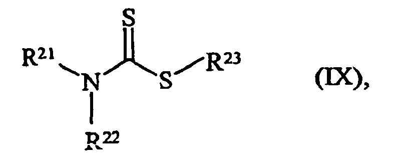 worin die Reste R²¹, R²² und R²³ jeweils unabhängig voneinander für Wasserstoff, einen linearen oder verzweigten, gesättigten oder ungesättigten, gegebenenfalls substituierten Alkylrest mit 1 bis 24 C-Atomen, einen linearen oder verzweigten, gesättigten oder ungesättigten, gegebenenfalls substituierten Acylrest mit 2 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

Im Rahmen einer bevorzugten Ausführungsform der vorliegenden Erfindung enthält eine erfindungsgemäße Stabilisatorzusammensetzung eine Verbindung der allgemeinen Formel IX, worin R²¹ oder R²² oder R²¹ und R²² für H und R²³ für einen linearen Alkylrest mit 1 bis 12 C-Atomen steht.

Wenn eine erbndungsgemäße Stabilisatorzusammensetzung eine Verbindung der allgemeinen Formel IX oder ein Gemisch aus zwei oder mehr solcher Verbindungen enthält, so beträgt der Anteil dieser Verbindung oder dieser Verbindungen an der gesamten Stabilisatorzusammensetzung etwa 0,1 bis etwa 50 Gew.-%, vorzugsweise etwa 1 bis etwa 20 Gew.-%.

Neben einer Verbindung mit mindestens einem mercaptofunktionellen sp²-hybridisierten C-Atom, beispielsweise einer Verbindung gemäß einer der allgemeinen Formeln II, VII, VIII oder IX oder einem Gemisch aus zwei oder mehr davon, enthält eine erfindungsgemäße Stabilisatorzusammensetzung noch mindestens eine weitere Verbindung. Als mindestens eine weitere Verbindung sind beispielsweise halogenhaltige Salze der Oxysäuren, insbesondere die Perchlorate, geeignet. Beispiele für geeignete Perchlorate sind diejenigen der allgemeinen Formel M(ClO₄)ₙ, wobei M für Li, Na, K, Mg, Ca, Sr, Zn, Al, La oder Ce steht Der Index n steht entsprechend der Wertigkeit von M für die Zahl 1, 2 oder 3. Die genannten Perchloratsalze können mit Alkoholen (Polyolen, Cyclodextrinen) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole, sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole oder Thiozucker.

Die Perchloratsalze können dabei in verschiedenen gängigen Darreichungsform eingesetzt werden, beispielsweise als Salz oder wäßrigen Lösung aufgezogen auf ein geeignetes Trägermaterial wie PVC, Calciumsilik-at, Zeolithe oder Hydrotalcite oder eingebunden durch chemische Reaktion in einen Hydrotalcit. Eine als Bestandteil der erfindungsgemäßen Stabilisatorzusammensetzung geeignete Kombinationen von Na-Perchlorat und Calciumsilikat kann beispielsweise durch Kombination einer wäßrigen Lösung von Na-Perchlorat (Gehalt an Na-Perchlorat etwa 60% oder mehr) mit Calciumsilikat, beispielsweise einem synthetischen, amorphen Calciumsilikat, erfolgen. Geeignete Teilchengrößen für das einsetzbare Calciumsilikat liegen beispielsweise bei etwa 0,1 bis etwa 50 , beispielsweise etwa 1 bis etwa 20 µm. Geeignete perchlorathaltige Darreichungsformen werden beispielsweise in der US-A 5,034,443 beschrieben, auf deren perchlorathaltige Darreichungsformen betreffende Offenbarung ausdrücklich Bezug genommen wird und wobei diese Offenbarung als Bestandteil der Offenbarung des vorliegenden Textes angesehen wird.

Weitere geeignete Darreichungsformen sind beispielsweise in der EP-A 394,547, der EP-A 457,471 und der WO 94/24200 genannt, auf deren geeignete Darreichungsformen betreffende Offenbarung ausdrücklich Bezug genommen wird und wobei diese Offenbarung als Bestandteil der Offenbarung des vorliegenden Textes angesehen wird.

Eine erfindungsgemäße Stabilisatorzusammensetzung kann im Rahmen der vorliegenden Erfindung ein entsprechendes Salz einer halogenhaltige Oxysäure in einer Menge von etwa 0,1 bis etwa 40 Gew.-%, beispielsweise etwa 1 bis etwa 35 Gew.-%, insbesondere etwa 10 bis etwa 20 Gew.-%, jeweils abhängig von der Darreichungsform, enthalten. Bezogen auf den Gehalt an Anionen der halogenhaltige Oxysäure, beispielsweise bezogen auf den Gehalt an Perchloratanionen, beträgt der Gehalt beispielsweise etwa 0,01 bis etwa 20 Gew.-%, insbesondere etwa 1 bis etwa 10 Gew.-%.

Als weiterer Bestandteil der erfindungsgemäßen Stabilisatorzusammensetzungen eignen sich beispielsweise Carbazol oder Carbazolderivate oder Gemische aus zwei oder mehr davon.

Unter "Carbazol oder Carbazolderivaten" werden im Rahmen der vorliegenden Erfindungsverbindungen der allgemeinen Formel III 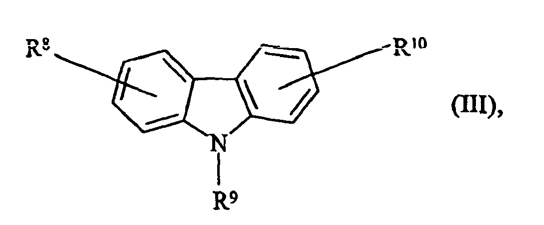 verstanden, worin die Reste R⁸, R⁹ und R¹⁰ jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

Wenn eine erfindungsgemäße Stabilisatorzusammensetzung eine Verbindung der allgemeinen Formel III oder ein Gemisch aus zwei oder mehr solcher Verbindungen enthält, so beträgt der Anteil dieser Verbindung oder dieser Verbindungen an der gesamten Stabilisatorzusammensetzung etwa 0,1 bis etwa 40 Gew.-%, vorzugsweise etwa 1 bis etwa 20 Gew.%.

Im Rahmen einer weiteren Ausführungsform der vorliegenden Erfindung enthält eine erfindungsgemäße Stabilisatorzusammensetzung ein 2,4-Pyrrolidindion oder ein 2,4-Pyrrolidindion-Derivat. Unter einem "2,4-Pyrrolidindion" oder einem 2,4-Pyrrolidindion-Derivat" wird im Rahmen der vorliegenden Erfindung eine Verbindung der allgemeinen Formel IV

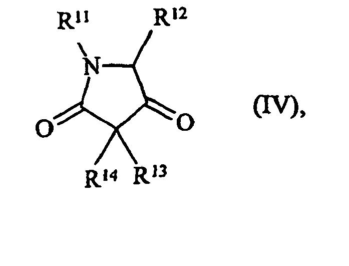

Verstanden, worin die Reste R¹¹, R¹², R¹³ und R¹⁴ jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

Im Rahmen einer bevorzugten Ausführungsform der vorliegenden Erfindung enthält eine erfindungsgemäße Stabilisatorzusammensetzung eine Verbindung der allgemeinen Formel IV, worin R¹¹ für Phenyl, R¹² für Acetyl und R¹³ und R¹⁴ für Wasserstoff stehen.

Wenn eine erfindungsgemäße Stabilisatorzusammensetzung eine Verbindung der allgemeinen Formel IV oder ein Gemisch aus zwei oder mehr solcher Verbindungen enthält, so beträgt der Anteil dieser Verbindung oder dieser Verbindungen an der gesamten Stabilisatorzusammensetzung etwa 0,1 bis etwa 40 Gew.-%, vorzugsweise etwa 1 bis etwa 20 Gew.-%.

Ebenfalls als Bestandteil der erfindungsgemäßen Stabilisatorzusammensetzungen eignen sich Verbindungen mit einem Strukturelement der allgemeinen Formel I 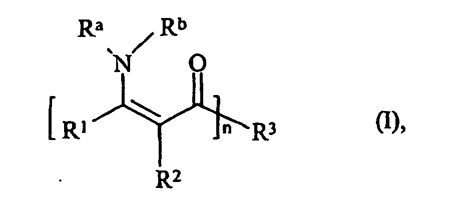 worin n für eine Zahl von 1 bis 100.000, die Reste R^{a}, R^{b}, R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloallcyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 0- oder S-Atomen oder 0- und S-Atomen oder für ein Polymeres, das über 0, S, NH, NR^{a} oder CH₂C(O) mit dem in Klammern stehenden Strukturelement verbunden ist, steht oder der Rest R³ mit dem Rest R¹ so verbunden ist, daß insgesamt ein gegebenenfalls substituiertes, gesättigtes oder ungesättigtes heterocyclisches Ringsystem mit 4 bis 24 C-Atomen gebildet wird, wobei der Rest R¹ in einem Ringsystem mit R³ nicht für NH oder NR^{a} steht, oder Gemische aus zwei oder mehr der genannten Verbindungen.

Im Rahmen einer bevorzugten Ausführungsform der vorliegenden Erfindung wird als Verbindung der allgemeinen Formel I eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest R³ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2 hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel I eine Verbindung eingesetzt, in der R¹ für einen linearen Alkylrest mit 1 bis 4 C-Atomen, R² für Wasserstoff und R³ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel I umfassen beispielsweise β-Aminocrotonsäurestearylester, 1,4-Butandiol-di(β-aminocrotonsäure)ester, Thio-diethanol-β-aminocrotonsäureester, Trimethylolpropan-tri-β-aminocrotonsäureester, Pentaerythrit-tetra-β-aminocrotonsäureester, Dipentaerythrit-hexa-β-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls im Rahmen der vorliegenden Erfindung als Verbindungen der allgemeinen Formel I geeignet sind Aminouracilverbindungen der allgemeinen Formel V 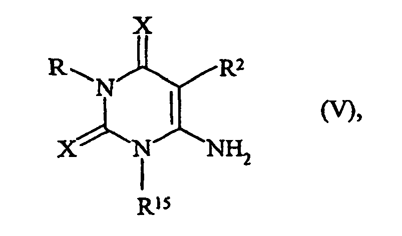 worin die Reste R und R⁷ die bereits obengenannte Bedeutung haben und der Rest R¹⁵ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Die Verbindung gemäß Formel V fällt damit unter die Verbindungen gemäß Formel I, wobei n in der allgemeinen Formel I für 1 und die Reste R¹ und R³ gemäß der allgemeinen Formel I zu dem Strukturelement der allgemeinen Formel VI 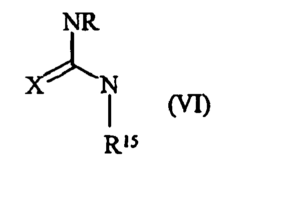 verbunden sind, worin X für S oder O steht. R¹ steht im Falle einer Verbindung der allgemeinen Formel V also für N-R¹⁵, während R³ für -RN-C=X steht und beide Reste über eine N-C-Bindung kovalent zu einem heterocyclischen Ring verknüpft sind.

Vorzugsweise werden im Rahmen der vorliegenden Erfindung Verbindungen der allgemeinen Formel V eingesetzt, bei denen R² für Wasserstoff steht

Im Rahmen einer weiteren bevorzugten Ausführungsform der vorliegenden Erfindung werden in den erfindungsgemäßen Stabilisatorzusammensetzungen Verbindungen der allgemeinen Formel V eingesetzt, bei denen R und R¹⁵ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen der allgemeinen Formel V eingesetzt, worin R und R¹⁵ für Wasserstoff, Methyl, Ethyl, n-Propyl, Isopropyl, n-, i-, sec- oder t-Butyl stehen.

Ebenfalls als Verbindungen der allgemeinen Formel I geeignet sind beispielsweise Verbindungen, in denen die Reste R¹ und R² zu einem aromatischen oder heteroaromatischen System verbunden sind, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung enthält eine erfindungsgemäße Stabilisatorzusammensetzung eine Verbindung der allgemeinen Formel I oder ein Gemisch aus zwei oder mehr Verbindungen der allgemeinen Formel I, beispielsweise eine Verbindung der allgemeinen Formel V, in einer Menge von etwa 0,1 bis etwa 99,5 Gew.-%, insbesondere etwa 5 bis etwa 50 Gew.-% oder etwa 5 bis etwa 25 Gew.-%.

Im Rahmen einer weiteren bevorzugten Ausführungsform der vorliegenden Erfindung enthält eine erfindungsgemäße Stabilisatorzeisammensetzung mindestens eine Verbindung der allgemeinen Formel II und ein halogenhaltiges Salz einer Oxysäure, insbesondere ein Perchlorat, oder ein Gemisch aus zwei oder mehrer derartigen Salzen, oder mindestens eine Verbindung der allgemeinen Formel II und eine Verbindung der allgemeinen Formel I oder ein Gemisch aus zwei oder mehr solcher Verbindungen der allgemeinen Formel I, oder eine Verbindung der allgemeinen Formel I und ein halogenhaltiges Salz einer Oxysäure oder ein Gemisch aus zwei oder mehr derartigen Salzen und eine Verbindung der allgemeinen Formel I oder ein Gemisch aus zwei oder mehr solcher Verbindungen.

Erfindungsgemäß geeignete Stabilisatorzusammensetzungen enthalten beispielsweise
- etwa 30 bis etwa 70 Gew.-% einer Verbindung mit mindestens einem mercaptofunktionellen sp²-hybridisierten C-Atom, insbesondere Thioharnstoff oder ein Thioharnstoffderivat der allgemeinen Formel II, oder eines Gemischs aus zwei oder mehr solcher Verbindungen und
- etwa 30 bis etwa 70 Gew.-% eines halogenhaltigen Salzes einer Peroxysäure oder eines Gemischs aus zwei oder mehr solcher Salze,
oder
- etwa 30 bis etwa 70 Gew.-% einer Verbindung mit mindestens einem mercaptofunktionellen sp²-hybridisierten C-Atom, insbesondere Thioharnstoff oder ein Thioharnstoffderivat der allgemeinen Formel II, oder eines Gemischs aus zwei oder mehr solcher Verbindungen und
- etwa 30 bis etwa 70 Gew.-% einer Verbindung mit einem Strukturelement der allgemeinen Formel I oder eines Gemischs aus zwei oder mehr solcher Verbindungen, insbesondere eine auf β-Aminocrotonsäure basierende Verbindung oder ein Gemisch aus zwei oder mehr solcher Verbindungen
oder
- etwa 20 bis etwa 60 Gew.-% einer Verbindung mit mindestens einem mercaptofunktionellen sp²-hybridisierten C-Atom, insbesondere Thioharnstoff oder ein Thioharnstoffderivat der allgemeinen Formel II, oder eines Gemischs aus zwei oder mehr solcher Verbindungen und
- etwa 20 bis etwa 60 Gew.-% eines halogenhaltigen Salzes einer Peroxysäure oder eines Gemischs aus zwei oder mehr solcher Salze und
- etwa 20 bis etwa 60 Gew.-% einer Verbindung mit einem Strukturelement der allgemeinen Formel I oder eines Gemischs aus zwei oder mehr solcher Verbindungen, insbesondere eine auf β-Aminocrotonsäure basierende Verbindung oder ein Gemisch aus zwei oder mehr solcher Verbindungen.

Im Rahmen einer weiteren Ausführungsform der vorliegenden Erfindung kann eine erfindungsgemäße Stabilisatorzusammensetzung noch Zusatzstoffe enthalten.

Als Zusatzstoffe eignen sich beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatischen Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxytetramethylen)glykolen, Pentan-1,5-diol, Hexan-1,6-diol, Hexan-2,4,6-triol, Glyzerin, 1,1,1-Trimethylolpropan, Bis-Trimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl)phthalimid oder 2,3-Epoxypropyl-4-methoxyphenylether.

Ebenfalls geeignet sind N-Glycidylverbindungen, wie sie durch Dehydrochlorierung der Redaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R-C(O)CHR*''*-C(O)R*'''*, wie sie beispielsweise auf S. 5 der EP- 1 046 668 beschrieben sind, auf die insbesondere im Hinblick auf die Reste R', R" und R*'''* ausdrücklich bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palnütoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoylp-chlorbenzoylmethan, Bis(2-hydroxybenzoyl)methan, 4-Methoxybenzoylbenzoylmethan, Bis(4-methoxybenzoyl)methan, Benzoylfonnylmethan, Benzoylacetylphenylmethan, I-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylnnethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester oder mehrkernige β-Ketoester wie sie in der EP-A 433 230 beschrieben sind, auf die ausdrücklich bezug genommen wird, oder Dehydracetsäure sowie deren Zink-, magnesium- oder Alkalisalze oder die Alkali- Erdalkali- oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.%, beispielsweise bis zu etwa 10 Gew.%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Aminen wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemä-ßen Stabilisatorzusammensetzung in einer Menge von bis zu etwa 30 Gew.%, beispielsweise bis zu etwa 10 Gew.% enthalten sein.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel X

M²⁺₍₂₊ₓ₎Al³⁺_{(1+y)}(OH)_{(6+z)}A^{k-}ₐ[Bₙ]ⁿ¹_{b}*m H₂O (X),

worin M für Calcium, Magnesium oder Zink oder Gemische aus zwei oder mehr davon, A für ein k-wertiges anorganisches oder organisches Säureanion, k für 1, 2 oder 3, B für ein von A verschiedenes anorganisches oder organisches Säureanion steht, n für eine ganze Zahl > 1 steht und, sofern n >1 ist, den Polymerisationsgrad des Säureanions angibt und 1 für 1, 2 3 oder 4 steht und die Wertigkeit des Säureanions angibt, wobei für n = 1 1 für 2, 3 oder 4 steht und für n > 1 die Wertigkeit der einzelnen Monomereinheiten des Polyanions angibt und für 1, 2, 3 oder 4 steht und nl die Gesamtwertigkeit des Polyanions angibt und die folgenden Regeln für die Parameter x, y, a, b, n, z, und k gelten:
0 ≤ x < 0,6,
0 ≤ y< 0,4, wobei entweder x = 0 oder y = 0,
0 < a < 0,8/n und
z = 1 + 2x + 3y - ka - n/b.

Im Rahmen einer bevorzugten Ausführungsform der vorliegenden Erfindung werden als Zusatzstoffe Verbindungen der allgemeinen Formel X eingesetzt, worin M für Calcium steht, das gegebenenfalls im Gemisch mit Magnesium oder Zink oder Magnesium und Zink vorliegen kann.

In der allgemeinen Formel X steht A für ein k-wertiges anorganisches oder organisches Säureanion, wobei k für 1, 2 oder 3 steht. Beispiele für im Rahmen von erfindungsgemäß einsetzbaren Hydrocalumiten vorliegende Säureanionen sind Halogenidionen, SO₃²⁻, SO₄²⁻, S₂O₃²⁻, S₂O₄²⁻, HPO₃²⁻, PO₄³⁻, CO₃²⁻, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanionen, insbesondere ein Halogenidion, beispielsweise F⁻, Cl⁻ oder Br⁻, vorzugsweise für Cl⁻.

In der allgemeinen Formel X steht B für ein Säureanion, das von A verschieden ist. Für den Fall, daß in der allgemeinen Formel X n für die Zahl 1 steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel X vorliegende Säureanionen B sind beispielsweise O²⁻, SO₃²⁻, SO₄²⁻, S₂O₃²⁻, S₂O₄²⁻, HPO₃²⁻, PO₄³⁻, CO₃²⁻, Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel VII für ein Borat oder ein Anion einer gegebenenfalls funktionalisierte Di-, Tri- oder Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall daß n in der allgemeinen Formel X für eine Zahl von mehr als 1 steht, steht der Term [Bₙ]ⁿ¹⁻ für ein anorganisches oder organisches Polyanion mit dem Polymerisationsgrad n und der Wertigkeit 1 der einzelnen Monomereinheiten des Polyanions mit der Gesamtwertigkeit nl, wobei 1 gleich oder größer als 1 ist. Beispiele für geeignete Polyanionen [Bn]ⁿ¹⁻ sind Polyacrylate, Polycarboxylate, Polyborate, Polysilikate, Polyphosphate oder Polyphosphonate.

In allen obengenannten Fällen können die Säureanionen A und B in einem beliebigen Verhältnis a/b in den Verbindungen der allgemeinen Formel X enthalten sein.

Bei den Verbindungen der allgemeinen Formel X handelt es sich nicht um schichtartig aufgebaute Verbindungen vom Hydrotalcit- bzw. Hydroalumittyp, sondern um eine physikalische Mischung von M²⁺/Aluminiumoxidhydraten mit Salzen zweiwertiger Metalle. Röntgendiffraktogramme der in der erfindungsgemäßen Zusammensetzung eingesetzten Verbindungen der allgemeinen Formel X zeigen eindeutig, daß es sich nicht um diskrete kristalline Verbindungen eines bekannten Typs sondern um röntgenamorphe Mischungen handelt.

Zur Herstellung der Verbindungen gemäß der allgemeinen Formel X können, bekannten Verfahren folgend, Lösungen bzw. Suspensionen oxidischer Formen der gewünschten Kationen (z.B. NaAlO₂, Ca(OH)₂, Zn(OH)₂, Al(OH)₃) mit Lösungen oder Suspension von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250 °C getrocknet werden. Die zugesetzte Menge an Oberflächenbehandlungsmittel beträgt beispielsweise etwa 1 bis etwa 20 Gew.-%.

Verbindungen der allgemeinen Formel X können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder deren Gemische.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-0ctylsalicylsäure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden vorzugsweise Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren bevorzugten Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gcw.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die obengenannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-eyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.%, insbesondere bis etwa 10 Gew.-%, enthalten.

Eine erfindungsgemäße Stabilisatorzusammensetzung kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden verstanden.

Eine erfindungsgemäße Stabilisatorzusammensetzung kann die beschriebenen blockierten Mercaptane in einer Menge von bis zu etwa 30 Gew.-%, insbesondere bis zu etwa 10 Gew.-%, enthalten.

Eine erfindungsgemäße Stabilisatorzusammensetzung kann weiterhin Gleitmittel wie Montanwachs, Fettsäureester, gereinigte oder hydrierte natürliche oder synthetische Triglyceride oder Partialester, Polyethylenwachse, Amidwachse, Chlorparaffine, Glyzerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet.

Eine erfindungsgemäße Stabilisatorzusammensetzung kann die beschriebenen Gleitmittel in einer Menge von bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.%, 2 Gew.% oder 5 Gew.-%.

Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba, Sb)O₂, Cr₂O₃, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Eine erfindungsgemäße Stabilisatorzusammensetzung kann im Rahmen bevorzugter Ausführungsformen der vorliegenden Erfindung eine komplexe Zusammensetzung aufweisen. Grundsätzlich sind als Bestandteil der erfindungsgemäßen Zusammensetzungen im wesentlitchen die bereits im Rahmen dieses Textes genannten Verbindungen einsetzbar. Eine erfindungsgemäße Stabilisatorzusammensetzung kann demnach beispielsweise ausschließlich Verbindungen enthalten, die im Hinblick auf die Anfangsfarbe oder die Farbstabilität wirksam sind. Eine erfindungsgemäße Stabilisatorzusammensetzung kann jedoch darüber hinaus weitere der obengenannten Verbindungen, insbesondere Zusatzstoffe enthalten, welche die Verarbeitbarkeit von halogenhaltigen Kunststoffen oder die Eigenschaften von aus solchen Kunststoffen hergestellten Formkörpern beeinflussen.
Eine erfindungsgemäße Stabilisatorzusammensetzung weist demnach beispielsweise die in den nachfolgenden Tabellen 1 bis 4 beispielhaft aufgeführten Bestandteile auf. Alle nachfolgenden Angaben sind in Gewichtsprozent, bezogen auf die gesamte Stabilisatorzusammensetzung, angegeben.

**Tabelle 1:**

| | Nr.1 | Nr.2 | Nr.3 | Nr. 4 | Nr. 5 | Nr. 6 | Nr.7 | Nr. 8 |
|---|---|---|---|---|---|---|---|---|
| (Di)Arylthioharnstoff | 15 - 50 | 15 - 50 | | 15 - 50 | 2 - 10 | 2 - 10 | 2 - 10 | 2 - 10 |
| Aminocrotonsäureester | 15 - 50 | 15 - 50 | 15 - 50 | 2 - 10 | | 2-10 | 2 - 10 | 2-10 |
| Perchlorat (geträgert, 10%) | | | | | 2-10 | 2-10 | 2 - 10 | 2-10 |
| Hydrocalumit / Hydrotalcit / Zeolith | 20 - 40 | | 20 - 40 | 40 - 80 | 40 - 80 | 40 - 80 | 40 - 80 | |
| anorganische Säurefänger (z. B. Calciumhydroxid) | | | | | | | | 40 - 80 |
| Ca- und/oder Zn-Seifen | | 10-30 | 10-30 | 10-40 | 10-40 | 10-40 | 10-40 | 10-40 |

**Tabelle 2:**

| | Nr. 9 | Nr. 10 | Nr. 11 | Nr. 12 | Nr. 13 | Nr. 14 | Nr. 15 | Nr. 16 |
|---|---|---|---|---|---|---|---|---|
| (Di)Arylthioharnstoff | 2 - 10 | 15 - 50 | 5 - 10 | 2 - 10 | 2 - 10 | 2 - 10 | 2 - 10 | 2 - 10 |
| Aminocrotonsäureester | 2 - 10 | | 5 - 10 | | 2 - 10 | 2 - 10 | 2 - 10 | 2 - 10 |
| Perchlorat (geträgert, 10%) | 2-10 | 15 - 50 | | 5 - 20 | 5 - 20 | 5 - 20 | 5 - 20 | 2 - 20 |
| Hydrocalumit / Hydrotalcit / Zeolith | 40 - 80 | 20 - 40 | | | | | | 4 - 10 |
| Ca- und/oder Zn-Seifen | 10-40 | 10-30 | 5-25 | 5-25 | 5-25 | 5-25 | 5-25 | 5-25 |
| innere Gleitmittel (z.B. Fettsäureester) | | | 65- 80 | 65 - 80 | 65 - 80 | 65-80 | 65-80 | 65 - 80 |
| Phosphitester | | | | | | 5 - 20 | | |
| β-Diketone | | | | | | | 5-20 | 5 - 20 |
| Antioxidantien | 0,2 - 5 | | | | | | | |

**Tabelle 3:**

| | Nr. 17 | Nr. 18 | Nr. 19 | Nr. 20 | Nr. 21 | Nr. 22 | Nr. 23 | Nr. 24 |
|---|---|---|---|---|---|---|---|---|
| (Di)Arylthioharnstoff | | 2-10 | | 8-20 | 5-15 | 5-15 | 5-15 | 5-15 |
| substituiertes Mercaptobenzothiazol | 2 - 10 | | 2 - 10 | | | | | |
| Aminocrotonsäureester | 2 -10 | | | 8 - 20 | 5 - 15 | | 5 - 15 | 5 - 15 |
| Aminosalicylat | | 2 - 10 | 2 - 10 | | | | | |
| Perchlorat (geträgert, 10%) | 5-20 | 5-20 | 5-20 | | | 1-10 | 1-10 | 1-10 |
| Hydrocalumit / Hydrotalcit / Zeolith | | | | 20 - 40 | 20-40 | 10 - 30 | 10 - 30 | |
| anorganische Säurefänger (z. B. Calciumhydroxid) | | | | | | 10 - 30 | 10 - 30 | 20 - 40 |
| Ca- und/oder Zn-Seifen | 5 - 25 | 5 - 25 | 5 - 25 | 10 - 20 | 10 - 30 | 10 - 30 | 10 - 30 | 10 - 30 |
| innere Gleitmittel (z.B. Fettsäureester) | 65-80 | 65-80 | 65-80 | 10-20 | 10-30 | 10-30 | 10 - 30 | 10 - 30 |
| äußere Gleitmittel (z.B. PE-Wachse, oxidierte PE-Wachse) | | | | 10-20 | 10-30 | 10-30 | 10-30 | 10-30 |
| Polyol (z.B. Trimethylolpropan oder Sorbitol) | | | | | | | | 5 - 15 |

**Tabelle 4:**

| | Nr. 24 | Nr. 25 | Nr. 26 | Nr. 27 | Nr. 28 | Nr. 29 | Nr. 30 |
|---|---|---|---|---|---|---|---|
| (Di)Arylthioharnstoff | 5 - 15 | 5 -15 | 5 - 15 | 5 - 15 | | 5-15 | |
| substituiertes Mercaptobenzothiazol | | | | | 5-15 | | 5-15 |
| Aminocrotonsäureester | 5 - 15 | 5 - 15 | 5-15 | 5 - 15 | 5 - 15 | | |
| Aminosalicylat | | | | | | 5-15 | 5 - 15 |
| Perchlorat (geträgert, 10%) | 1-10 | 1-10 | 1-10 | 1-10 | 1-10 | 1-10 | 1-10 |
| Hydrocalumit /Hydrotalcit / Zeolith | | | | 10- 30 | 10- 30 | 10- 30 | 10-30 |
| anorganische Säurefänger (z. B. Calciumhydroxid) | 20 - 40 | 20 - 40 | 20 - 40 | 10 - 30 | 10 - 30 | 10 - 30 | 20 -40 |
| Ca- und/oder Zn-Seifen | 10-30 | 10- 30 | 10- 30 | 10- 30 | 10- 30 | 10- 30 | 10-30 |
| innere Gleitmittel (z.B. Fettsäureester) | 10-30 | 10- 30 | 10- 30 | 10- 30 | 10- 30 | 10- 30 | 10-30 |
| äußere Gleitmittel (z.B. PE-Wachse, oxidierte PE- Wachse) | 10 - 30 | 10 - 30 | 10 - 30 | 10 - 30 | 10 - 30 | 10 - 30 | 10-30 |
| Polyol (z.B. Trimethylolpropan oder Sorbitol) | 5 - 15 | 5 -15 | 5 -15 | 5 -15 | 5 -15 | 5 - 15 | 5 - 15 |
| Phosphitester | | 5-15 | | | | | |
| β-Diketone | | | 5 - 15 | | | | |

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze die Vinylchlorideinheiten im Polymerrückgrat enthalten, Copolymere von Vinylchlorid und Vinylestem aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Stabilisatoriusammeasetzungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Ein weiterer Gegenstand der vorliegenden Erfindung betrifft daher eine Polymerzusammensetzung, mindestens enthaltend ein halogeniertes Polymeres und eine erfindungsgemäße Stabilisatorzusammensetzung.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt. Im Rahmen einer besonders bevorzugten Ausführungsform der vorliegenden Erfindung weist eine erfindungsgemäße Polymerzusammensetzung beispielsweise die in der nachfolgenden Tabelle 5 genannten Bestandteile auf (alle Angaben in phr):

**Tabelle 5:**

| Polymerzusammensetzungen | P1 | P 2 | P 3 | P 4 | P 5 | P 6 | P7 | P8 |
|---|---|---|---|---|---|---|---|---|
| | | | | | | | | |
| PVC | 100 | 100 | 100 | 100 | 100 | 100 | 100 | 100 |
| Polyacrylat | | | | | | 0,5 - 10 | 0,5 - 10 | 0,5 - 10 |
| Füllstoff (Kreide) | 0-70 | 0-50 | | 1,0-10 | 1,0-10 | 1,0-10 | 1,0-10 | 1,0-10 |
| Weichmacher | 40 - 70 | 0 - 50 | 40 - 70 | | | | | |
| Pigment (Ti02) | | | | | 1,0 - 10 | 1,0 - 10 | 1,0 - 10 | 1,0 - 10 |
| innere / äußere Gleitmittel | | | | | | 0,5 - 4 | | |
| anorganischer Säurefänger | | | | | | | 0,5-4 | |
| Beispiele 1-10 | | | | | | 2,0-7 | | |
| Beispiele 11-19 | | | | | | | 2,0-7 | |
| Beispiele 20-30 | | | | 2,0-7 | 2,0-7 | | | 2,0-7 |
| Beispiele 1 - 19 | 2,5- 12 | 2,5 - 12 | 2,5 -12 | | | | | |

Die vorliegende Erfindung betrifft auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäße Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung, als trockenen Mischung, als Lösung oder Schmelze zuzusetzen.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzung zur Herstellung von hart- oder weich-PVC.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfaßt im Rahmen der vorliegenden Erfindung grundsätzlich alle dreidimensionalen Gebilde, die aus einer erfindungsgemäße Polymerzusammensetzung herstellbar sind. Der Begriff "Formkörper" umfaßt im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten., Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Die Erfindung wird nachfolgend durch Beispiele näher erläutert.

### Beispiele:

### 1. Rezepturen

Folgende Rezepturen wurden im Hinblick auf Ihre Stabilisatorwirkung überprüft:

### Beispiel 1: Rezepturen zum Vergleich von PVC ohne Diphenylthioharnstoff/ mit Diphenylthioharnstoff/ Kombinationen

| Rezeptur | 1 | 2 | 3 | 4 | 5 |
|---|---|---|---|---|---|
| PVC | 100,00 | 100,00 | 100,00 | 100,00 | 100,00 |
| Kreide | 2,00 | 2,00 | 2,00 | 2,00 | 2,00 |
| Calciumstearat | 0,60 | 0,60 | 0,60 | 0,60 | 0,60 |
| Zeolith | 1,00 | 1,00 | 1,00 | 1,00 | 1,00 |
| Calciumhydroxid | 0,30 | 0,30 | 0,30 | 0,30 | 0,30 |
| Perchlorat (10%) | | | 0,20 | | 0,20 |
| Aminocrotonat | | | | 0,30 | 0,30 |
| Fettsäureester | 0,60 | 0,60 | 0,60 | 0,60 | 0,60 |
| Diphenylthioharnstoff | | 0,30 | 0,30 | 0,30 | 0,30 |
| PE-Wachs | 0,50 | 0,50 | 0,50 | 0,50 | 0,50 |
| oxidiertes PE-Wachs | 0,30 | 0,30 | 0,30 | 0,30 | 0,30 |
| Titandioxid | 0.10 | 0,10 | 0.10 | 010 | 010 |

### Beispiel 2: Vergleich der UV-Stabilisierung einer erfindungsgemäßen Stabilisatorzusammensetzung gegenüber einer Stabilisatorzusammensetzung mit Aminouracil

**Tabelle 2.1**

| Rezeptur | 6 | 7 | 8 |
|---|---|---|---|
| PVC | 100,00 | 100,00 | 100,00 |
| Kreide | 2,00 | 2,00 | 2,00 |
| Calciumstearat | 0,60 | 0,60 | 0,60 |
| Zeolith | 0,75 | 0,75 | 0,75 |
| Calciumhydroxid | 0,20 | 0,20 | 0,20 |
| Perchlorat (10%) | 0,10 | 0,10 | 0,10 |
| Aminocrotonat | 0,20 | | |
| Fettsäureester | 0,60 | 0,60 | 0,60 |
| Diphenylthioharnstoff | 0,10 | | |
| PE-Wachs | 0,50 | 0,50 | 0,50 |
| oxidiertes PE-Wachs | 0,30 | 0,30 | 0,30 |
| Titandioxid | 0,10 | 0,10 | 0,10 |
| Aminouracil | | 0.30 | 0.10 |

### Beispiel 3: Vergleiche zu verschiedenen Kombinationen Diphenylthioharnstoff/Aminocrotonat mit anderen Verbindungen aus dem Stand der Technik

**Tabelle 3.1**

| Rezeptur | 9 | 10 | 11 | 12 | 13 |
|---|---|---|---|---|---|
| PVC | 100,00 | 100,00 | 100,00 | 100,00 | 100,00 |
| Kreide | 2,00 | 2,00 | 2,00 | 2,00 | 2,00 |
| Calciumstearat | 0,60 | 0,60 | 0,60 | 0,60 | 0,60 |
| Zeolith | 0,75 | 0,75 | 0,75 | 0,75 | 0,75 |
| Calciumhydroxid | 0,20 | 0,20 | 0,20 | 0,20 | 0,20 |
| Perchlorat (10%) | 0,10 | 0,10 | 0,10 | 0,10 | 0,10 |
| Aminocrotonat | 0,20 | 0,20 | 0,20 | 0,20 | 0,20 |
| Fettsäureester | 0,60 | 0,60 | 0,60 | 0,60 | 0,60 |
| Diphenylthioharnstoff | 0,30 | | | | |
| PE-Wachs | 0,50 | 0,50 | 0,50 | 0,50 | 0,50 |
| Oxidiertes PE-Wachs | 0,30 | 0,30 | 0,30 | 0,30 | 0,30 |
| Titandioxid | 0,10 | 0,10 | 0,10 | 0,10 | 0,10 |
| Bisphenol A - Glycidylether | | | | | |
| Di-tert-butylphenol | | 0,30 | | | |
| Polyethylenglycol | | | 0,30 | | |
| Phenylindol | | | | 0,30 | |
| Dehydroessigsäure | | | | | 0,30 |

**Tabelle 3.2**

| Rezeptur | 14 | 15 | 16 | 17 | 18 |
|---|---|---|---|---|---|
| PVC | 100,00 | 100,0 | 100,00 | 100,00 | 100,0 |
| Kreide | 2,00 | 2,00 | 2,00 | 2,00 | 2,00 |
| Caiciumstearat | 0,60 | 0,60 | 0,60 | 0,60 | 0,60 |
| Zeolith | 0,75 | 0,75 | 0,75 | 0,75 | 0,75 |
| Caiciumhydroxid | 0,20 | 0,20 | 0,20 | 0,20 | 0,20 |
| Perchlorat (10%) | 0,10 | 0,10 | 0,10 | 0,10 | 0,10 |
| Aminocrotonat | 0,20 | 0,20 | 0,20 | 0,20 | 0,20 |
| Fettsäureester | 0,60 | 0,60 | 0,60 | 0,60 | 0,60 |
| Diphenylthioharnstoff | 0,30 | | | | |
| PE-Wachs | 0,50 | 0,50 | 0,50 | 0,50 | 0,50 |
| Oxidiertes PE-Wachs | 0,30 | 0,30 | 0,30 | 0,30 | 0,30 |
| Titandioxid | 0,10 | 0,10 | 0,10 | 0,10 | 0,10 |
| Bisphenol A-Glycidylether | 0,30 | 0,30 | 0,30 | 0,30 | 0,30 |
| Di-tert-butylphenol | | 0.30 | | | |
| Polyethylenglycol | | | 030 | | |
| Phenylindol | | | | 030 | |
| Dehydroessigsäure | | | | | 030 |

### 2. Tests

Die nach den angegeben Rezepturen gefertigten Dryblends wurden auf einem Laborwalzwerk bei 190°C binnen 3 Minuten zu Fellen verarbeitet. Die Thermostabilität der so erhaltenen PVC-Prüfstücke wurde statisch sowohl im Kongo-Rot-Test nach DIN VDE 0472/T614 quantitativ ermittelt, als auch im Mathis-Ofen (200°C, Vorschub alle 5 Minuten) qualitativ visuell beurteilt. Zur Bestimmung der Anfangsfarbe wurde das PVC-Fell bei 180°C zu Preßplatten weiterverarbeitet. Deren Farbe wurde anhand des CIE-LAB-Farbsystems gemessen. Zur Bestimmung der UV-Stabilität wurden Prüfstücke für 24, 48, 72 Stunden mit Kunstlicht, erzeugt durch Glühlampen der Bezeichnung OSRAM-ULTRA-VITALUX (UV-A-Strahlung) in einem ARA-LUX-Gerät bestrahlt. Die Farbe der Prüfkörper wurde anschließend im CIE-LAB-System gemessen.

### 3. Ergebnisse

### Beispiel 1

| | HCl (Minuten) | L-Wert | a-Wert | b-Wert | Beurteilung Anfangsfarbe (visuell) | Beurteilung Farbhaltung (visuell) |
|---|---|---|---|---|---|---|
| Rezeptur 1 | 13 | 47,3 | 19,1 | 10,6 | 5 | 6 |
| Rezeptur 2 | 8 | 77,5 | 6,4 | 22,3 | 3 | 5 |
| Rezeptur 3 | 18 | 83,3 | 1,9 | 21,9 | 2 | 2 |
| Rezeptur 4 | 11 | 86,4 | -0,7 | 17,3 | 2 | 2 |
| Rezeptur 5 | 22 | 87,0 | -0,5 | 14,7 | 1 | 1 |

### Beispiel 2

| | | vor Bestrahlung | | | |
|---|---|---|---|---|---|
| | HCl (Minuten) | L-Wert | a-Wert | b-Wert | Farbbeurteilung (visuell) |
| Rezeptur 6 | 19 | 89,2 | -0,6 | 10,5 | 1 |
| Rezeptur 7 | 19 | 88,0 | -0,6 | 10,8 | 1 |
| Rezeptur 8 | 19 | 87,3 | -1,2 | 16,3 | 3 |

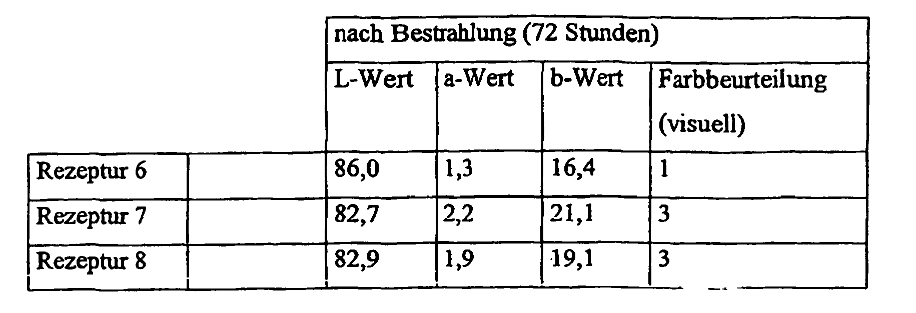

### Beispiel 3

| | HCl (Minuten) | L-Wert | a-Wert | b-Wert | Beurteilung Anfangsfarbe (visuell) | Beurteilung Farbhaltung (visuell) |
|---|---|---|---|---|---|---|
| Rezeptur 9 | 19 | 88,8 | -0,2 | 11,3 | 1 | 1 |
| Rezeptur 10 | 21 | 83,2 | 1,2 | 32,4 | 4 | 4 |
| Rezeptur 11 | 16 | 83,5 | 1,5 | 32,6 | 4 | 4 |
| Rezeptur 12 | 30 | 86, 1 | -0,6 | 16,4 | 2 | 3 |
| Rezeptur 13 | 18 | 84,3 | 0,3 | 26,8 | 4 | 4 |
| Rezeptur 14 | 19 | 86,5 | 0,0 | 12,3 | 1 | 1 |
| Rezeptur 15 | 25 | 84,9 | 1,1 | 27,7 | 4 | 4 |
| Rezeptur 16 | 22 | 85,1 | -0,1 | 29,7 | 4 | 4 |
| Rezeptur 17 | 34 | 87,4 | -0,8 | 16,9 | 3 | 3 |
| Rezeptur 18 | 22 | 83,6 | -0,3 | 27,7 | 4 | 4 |

## Patentansprüche

1. Stabilisatormammensetzung, mindestens enthaltend eine Verbindung, die ein mercaptofunktionelles sp²-hybridisiertes C-Atom aufweist, wobei es sich bei der Verbindung mit einem mercaptofunktionellen sp²-hybridisierten C-Atom nicht um einen Cyanacetylhamstoff handelt, und ein halogenhaltiges Salz einer Oxysäure.

2. Stabilisatorzusammensetzung, mindestens enthaltend eine Verbindung, die ein mercaploßmkdcmelles sp²-hybridisiertes C-Atom aufweist und ein halogenbaltiges Salz einer Oxysäure und ein Carbazol oder mindestens ein Carbazolderivat oder 2,4-Pyrrolidindion oder mindestens ein 2,4-Pyrrolidindion-Derivat oder mindestens eine Verbindung mit einem Strukturelement der allgemeinen Formel I 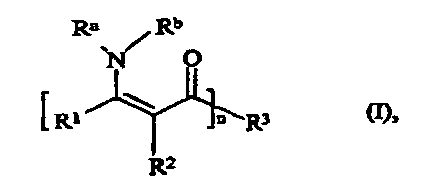 worin n for eine Zahl von 1 bis 100.000, die Reste R^{a}, R^{b} R¹ und R² jeweils unabhängig voneinander für Wasserstoff; einen gegebeneniaUs substituierten linearen oder verzweigten, gesättigten oder ungesättigten aliphatischen Alkylrest mit 1 bis 44 C-Atomen, einen gegebeu.enfa11s substituierten gesättigten oder ungesättigten Cyctoaikyhest mit 6 bis 44 C-Atomen oder einen gegebenen1Bl1s substituierten Aryhm mit 6 bis 44 C-Atomen oder einen gegebenenfalls substituierten A-ralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR^{a} oder CH₂C(O) mit dem in Klammem stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, wobei der Rest R¹ in einem Ringsystem mit R³ nicht für NH oder NR^{a} steht, oder ein Gemisch aus zwei oder mehr der genannten Verbindungen.

3. Stabilisatorzusammensetzung nach Anspruch 1 oder 2, **dadurch gekennzeichnet, dass** sie mindestens eine Verbindung, die ein mercaptofunktionelles sp²⁻hybridisiertes C-Atom aufweist und ein halogenhaltiges Salz einer Oxysäure und mindestens eine Verbindung mit einem Strukturdement der allgemeinen Formel I aufweist.

4. Stabilisatorzusammensetzung nach einem der Ansprüche 1 bis 3, **dadurch gekennzeichnet, dass** sie als halogenhaltiges Salz einer Oxysäure ein Perchlorat oder ein Gemisch aus zwei oder mehr Perchloraten enthält.

5. Stabilisatorzusammensetzung nach einem der Ansprüche 1 bis 4, **dadurch gekennzeichnet, dass** sie ein Carbazol der allgemeinen Formel III 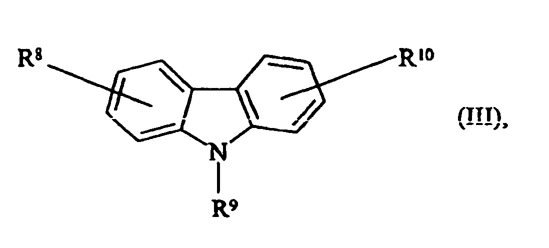 enthält, worin die Reste R⁸, R⁹ und R¹⁰ jeweils unabhängig voneinander für Wasserstoff, einen linearen oder verzweigten, gesättigten oder ungesättigten, gegebenenfalls substituierten Alkylrest mit 1 bis 24 C-Atomen, einen gesättigten oder ungesättigten, gegebenenfalls substituierten Cycloalkylrest mit 6 bis 24 C-Atomen oder einen gegebenenfalls substituierten Arylrest mit 6 bis 24 C-Atomen stehen.

6. Stabilisatorzusammensetzung nach einem der Ansprüche 1 bis 5, **dadurch gekennzeichnet, dass** sie ein 2,4-Pyrrolidindion der allgemeinen Formel IV 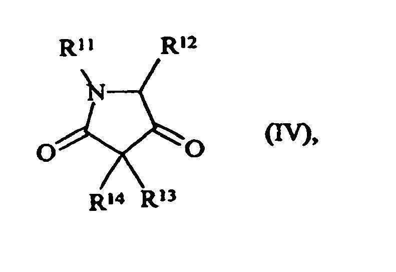 enthält, worin die Reste 11 bis 14 jeweils unabhängig voneinander für Wasserstoff oder einen linearen oder verzweigten, gesättigten oder ungesättigten, gegebenenfalls substituierten Alkylrest mit 1 bis 24 C-Atomen oder einen gegebenenfalls substituierten gesättigten oder ungesättigten Cycloalkylrest mit 6 bis 24 C-Atomen oder einen gegebenenfalls substituierten Arylrest mit 6 bis 24 C-Atomen stehen, oder ein Gemisch aus zwei oder mehr davon, enthält.

7. Stabilisatorzusammensetzung nach einem der Ansprüche 2 bis 6, **dadurch gekennzeichnet, dass** sie als Verbindung der allgemeinen Formel 1 ein Derivat der Aminoerötonsaure oder eine Verbindung der allgemeinen Formel V 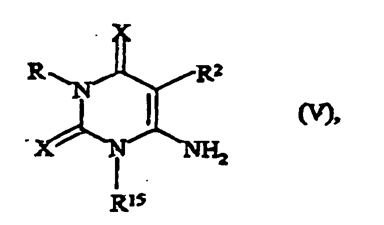 worin die Reste R und R² die bereits in Anspruch 2 genannte Bedeutung haben, X für S oder O steht, und der Rest R¹⁵ für Wasserstoff, einen gegebenenfalls substituierten linearen oder verzweigten, gesättigten oder ungesättigten aliphatischen Kohlenwasserstoffrest mit 1 bis 44 C-Atomen, einem gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht, oder ein Gemisch aus zwei oder mehr davon, enthält.

8. Stabilisatorzusammensetzung nach einem der Ansprüche 1 bis 7, **dadurch gekennzeichnet, dass** sie noch mindestens einen weiteren Zusatzstoff enthält.

9. Polymerzusammensetzung, mindestens enthaltend ein halogeniertes Polymeres und eine Stabilisatorzusammensetzung nach einem der Ansprüche 1 bis 8.

10. Polymerzusammensetzung nach Anspruch 9, **dadurch gekennzeichnet, dass** sie die Stabilisatorzusammensetzung gemäß einem der Ansprüche 1 bis 8 in einer Menge von 0,1 bis 10 Gew.-% enthält.

11. Verwendung einer Stabilisatorzusammensetzung gemäß einem der Ansprüche I bis 8 oder einer Polymerzusammensetzung gemäß einem der Ansprüche 9 oder 10 bei der Herstellung von polymeren Formkörpern oder Oberflächenbeschichtungsmitteln.

12. Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer Stabilisatorzusammensetzung gemäß einem der Ansprüche 1 bis 8 vermischt wird.

13. Formkörper, mindestens enthaltend eine Stabilisatorzusammensetzung gemäß einem der Ansprüche 1 bis 8 oder eine Polymerzusammensetzung gemäß einem der Ansprüche 9 oder 10.

## Revendications

1. Composition de stabilisants contenant au moins un composé ayant un atome de carbone mercapto-fonctionnel à hybridation sp², dans laquelle le composé ayant un atome de carbone mercapto-fonctionnel à hybridation sp² n'est pas une urée cyanoacétyle, et un sel d'un acide oxygénique halogéné.

2. Composition de stabilisants contenant au moins un composé ayant un atome de carbone mercapto-fonctionnel à hybridation sp² et un sel d'un acide oxygénique halogéné et un carbazole ou au moins un dérivé du carbazole ou 2,4-pyrrolidinedione ou au moins un dérivé du 2,4-pyrrolidinedione ou au moins un composé ayant un élément structurel ayant la formule générale I 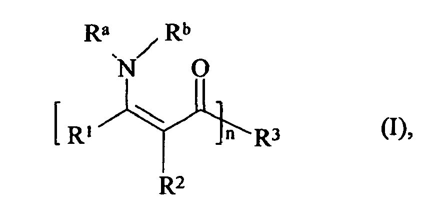 dans laquelle n est un nombre de 1 à 100.000, les substituants R^{a}, R^{b}, R¹ et R² représentent respectivement indépendamment l'un de l'autre l'hydrogène, un groupe alkyle aliphatique avec 1 à 44 atomes de carbone le cas échéant substitué linéaire ou ramifié, saturé ou insaturé, un groupe cycloalkyle avec 6 à 44 atomes de carbone le cas échéant substitué saturé ou insaturé, ou un groupe aryle avec 6 à 44 atomes de carbone le cas échéant substitué, ou un groupe aralkyle avec 7 à 44 atomes de carbone le cas échéant substitué; ou le substituant R¹ représente un groupe acyle avec 2 à 44 atomes de carbone le cas échéant substitué ou les substituants R¹ et R² sont reliés entre eux en un système aromatique ou hétérocyclique et dans lequel le substituant R³ représente l'hydrogène, un groupe alkyle ou alkylene ou oxyalkyle ou oxyalkylene ou mercaptoalkyle ou mercaptoalkylene ou aminoalkyle ou aminoalkylene aliphatique avec 1 à 44 atomes de carbone le cas échéant substitué, linéaire ou ramifié, saturé ou insaturé, un groupe cycloalkyle ou cycloalkylene ou oxycycloalkyle ou oxycycloalkylene ou mercaptocycloalkyle ou mercaptocycloalkylene ou aminocycloalkyle ou aminocycloalkylene avec 6 à 44 atomes de carbone le cas échéant substitué saturé ou insaturé, ou un groupe aryle ou arylene avec 6 à 44 atomes de carbone le cas échéant substitué, ou un groupe d'éther ou de thioéther avec 1 à 20 atomes d'oxygène ou de sulfure ou d'oxygène et de sulfure ou pour un polymère, lequel polymère est relié par O, S, NH, NR^{a} ou CH₂C(O) à l'élément de structure entre parenthèses, ou le substituant R³ est relié au substituant R¹, de manière telle qu'en tout un système cyclique hétérocyclique avec 4 à 24 atomes de carbone le cas échéant substitué saturé ou insaturé est formé dans lequel le substituant R¹ dans le système cyclique avec R³ ne représente pas NH ou NR^{a}, ou un mélange de deux ou plus des composés précités.

3. Composition de stabilisants selon la revendication 1 ou 2, **caractérisée en ce qu'**elle a au moins un composé, lequel a un atome de carbone mercapto-fonctionnel à hybridation sp² et un sel d'un acide oxygénique halogéné et au moins un composé ayant un élément de structurel ayant la formule générale I

4. Composition de stabilisants selon l'une des revendications 1 à 3, **caractérisée en ce qu'**elle contient un perchlorate ou un mélange de deux ou plus de perchlorates comme sel d'un acide oxygénique halogéné.

5. Composition de stabilisants selon l'une des revendications 1 à 4, **caractérisée en ce qu'**elle contient un carbazole ayant la formule générale III 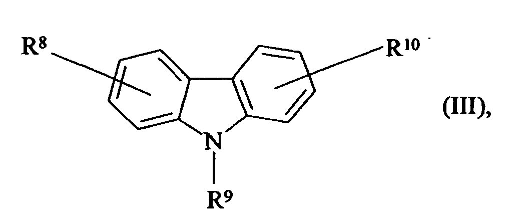 dans laquelle les substituants R⁸, R⁹ et R¹⁰ représentent respectivement indépendamment l'un de l'autre l'hydrogène, un groupe alkyle avec 1 à 24 atomes de carbone, linéaire ou ramifié, saturé ou insaturé le cas échéant substitué, un groupe cycloalkyle avec 6 à 24 atomes de carbone saturé ou insaturé, le cas échéant substitué, ou un groupe aryle avec 6 à 24 atomes de carbone, le cas échéant substitué.

6. Composition de stabilisants selon l'une des revendications 1 à 5, **caractérisée en ce qu'**elle contient un 2,4-pyrrolidinedione ayant la formule générale IV 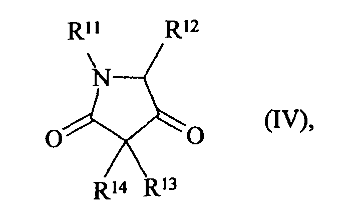 dans laquelle les substituants R¹¹ à R¹⁴ représentent respectivement indépendamment l'un de l'autre l'hydrogène, ou un groupe alkyle avec 1 à 24 atomes de carbone linéaire ou ramifié, saturé ou insaturé le cas échéant substitué, ou un groupe cycloalkyle avec 6 à 24 atomes de carbone le cas échéant substitué saturé ou insaturé, ou un groupe aryle avec 6 à 24 atomes de carbone le cas échéant substitué, ou elle contient un mélange de deux ou de plus de deux de ceux-ci.

7. Composition de stabilisants selon l'une des revendications 2 à 6, **caractérisée en ce qu'**elle contient un dérivé d'acide aminocrotonique ou un composé de la formule générale V 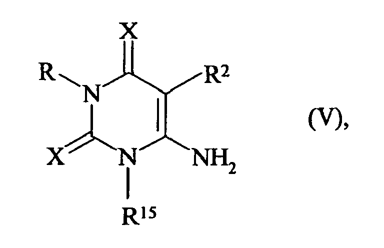 comme composé de la formule générale I, dans laquelle les substituants R et R² ont la signification déjà nommée dans la revendication 2, X représente le sulfure ou l'oxygène, et le substituant R¹⁵ représente l'hydrogène, un groupe hydocarbure aliphatique avec 1 à 44 atomes de carbone, le cas échéant substitué linéaire ou ramifié, saturé ou insaturé, un groupe hydocarbure cycloaliphatique avec 6 à 44 atomes de carbone, le cas échéant substitué saturé ou insaturé ou un groupe hydocarbure aromatique avec 6 à 44 atomes de carbone, le cas échéant substitué, ou un mélange de deux ou de plus de deux de ceux-ci.

8. Composition de stabilisants selon l'une des revendications 1 à 7, **caractérisée en ce qu'**elle contient encore au moins un autre additif.

9. Composition de polymère comportant au moins un polymère halogéné et une composition stabilisatrice selon l'une des revendications 1 à 8.

10. Composition de polymère selon la revendication 9, **caractérisée en ce qu'**elle contient la composition de stabilisants selon l'une des revendications 1 à 8 dans une quantité de 0,1 à 10 pourcentage en poids.

11. Utilisation d'une composition de stabilisants selon l'une des revendications 1 à 8 ou d'une composition de polymère selon l'une des revendications 9 ou 10 pour la production de matière moulable polymère ou de moyens de revêtement surfacique.

12. Procédé pour stabiliser un polymère halogéné, dans lequel un polymère halogéné ou un mélange de deux ou de plus de deux polymères halogénés ou un mélange d'un ou plusieurs polymères halogénés et un ou plusieurs polymères non halogénés est mélangé avec une composition de stabilisants selon l'une des revendications 1 à 8.

13. Matière moulable comportant au moins une composition de stabilisants selon l'une des revendications 1 à 8 ou une composition de polymère selon l'une des revendications 9 ou 10.

## Claims

1. Stabiliser composition, at least comprising a compound having a mercapto-functional sp²-hybridised carbon atom, the compound having a mercapto-functional sp²-hybridised carbon atom not being a cyanoacetylurea, and a halogen-containing salt of an oxy acid.

2. Stabiliser composition, at least comprising a compound having a mercapto-functional sp²-hybridised carbon atom and a halogen-containing salt of an oxy acid and a carbazole or at least one carbazole derivative or 2,4-pyrrolidinedione or at least one 2,4-pyrrolidinedione derivative or at least one compound having a structural element of the general formula I 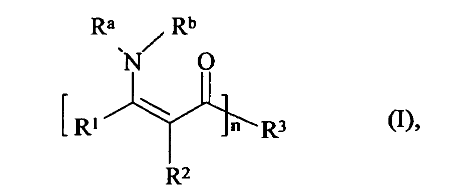 wherein n is a number from 1 to 100,000, the radicals R^{a}, R^{b}, R¹ and R² are each independently of the others hydrogen, an unsubstituted or substituted linear or branched, saturated or unsaturated aliphatic alkyl radical having from 1 to 44 carbon atoms, an unsubstituted or substituted saturated or unsaturated cycloalkyl radical having from 6 to 44 carbon atoms or an unsubstituted or substituted aryl radical having from 6 to 44 carbon atoms or an unsubstituted or substituted aralkyl radical having from 7 to 44 carbon atoms, or the radical R¹ is an unsubstituted or substituted acyl radical having from 2 to 44 carbon atoms or the radicals R¹ and R² are linked to form an aromatic or heterocyclic system and wherein the radical R³ is hydrogen, an unsubstituted or substituted, linear or branched, saturated or unsaturated aliphatic alkyl or alkylene radical or oxyalkyl or oxyalkylene radical or mercaptoalkyl or mercaptoalkylene radical or aminoalkyl or aminoalkylene radical having from 1 to 44 carbon atoms, an unsubstituted or substituted saturated or unsaturated cycloalkyl or cycloalkylene radical or oxycycloalkyl or oxycycloalkylene radical or mercaptocycloalkyl or mercaptocycloalkylene radical or aminocycloalkyl or aminocycloalkylene radical having from 6 to 44 carbon atoms or an unsubstituted or substituted aryl or arylene radical having from 6 to 44 carbon atoms or an ether or thioether radical having from 1 to 20 O or S atoms or O and S atoms, or is a polymer that is bonded to the structural element in brackets by way of O, S, NH, NR^{a} or CH₂C(O), or the radical R³ is so linked to the radical R¹ that in total an unsubstituted or substituted, saturated or unsaturated heterocyclic ring system having from 4 to 24 carbon atoms is formed, the radical R¹ in a ring system with R³ not being NH or NR^{a}, or a mixture of two or more of the mentioned compounds.

3. Stabiliser composition according to claim 1 or 2, **characterised in that** it has at least one compound having a mercapto-functional sp²-hybridised carbon atom and has a halogen-containing salt of an oxy acid and at least one compound having a structural element of the general formula I.

4. Stabiliser composition according to any one of claims 1 to 3, **characterised in that** as the halogen-containing salt of an oxy acid it comprises a perchlorate or a mixture of two or more perchlorates.

5. Stabiliser composition according to any one of claims 1 to 4, **characterised in that** it comprises a carbazole of the general formula III 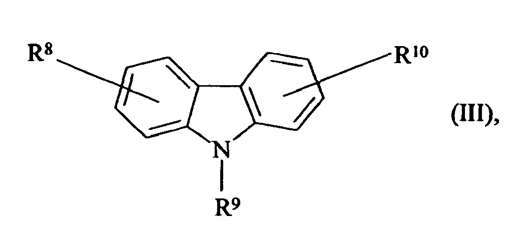 wherein the radicals R⁸, R⁹ and R¹⁰ are each independently of the others hydrogen, a linear or branched, saturated or unsaturated, unsubstituted or substituted alkyl radical having from 1 to 24 carbon atoms, a saturated or unsaturated, unsubstituted or substituted cycloalkyl radical having from 6 to 24 carbon atoms or an unsubstituted or substituted aryl radical having from 6 to 24 carbon atoms.

6. Stabiliser composition according to any one of claims 1 to 5, **characterised in that** it comprises a 2,4-pyrrolidinedione of the general formula IV 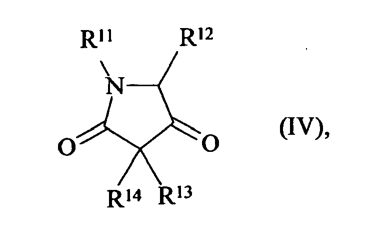 wherein the radicals R¹ to R¹⁴ are each independently of the others hydrogen, a linear or branched, saturated or unsaturated, unsubstituted or substituted alkyl radical having from 1 to 24 carbon atoms, an unsubstituted or substituted, saturated or unsaturated cycloalkyl radical having from 6 to 24 carbon atoms or an unsubstituted or substituted aryl radical having from 6 to 24 carbon atoms, or a mixture of two or more thereof.

7. Stabiliser composition according to any one of claims 2 to 6, **characterised in that** as the compound of the general formula I it comprises a derivative of amino-crotonic acid or a compound of the general formula V 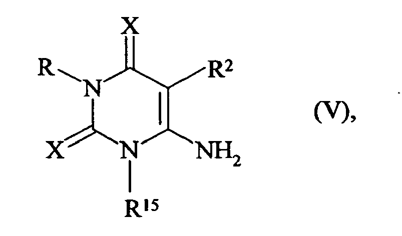 wherein the radicals R and R² have the meanings given in claim 2, X is S or O, and the radical R¹⁵ is hydrogen, an unsubstituted or substituted linear or branched, saturated or unsaturated aliphatic hydrocarbon radical having from 1 to 44 carbon atoms, an unsubstituted or substituted saturated or unsaturated cycloaliphatic hydrocarbon radical having from 6 to 44 carbon atoms or an unsubstituted or substituted aromatic hydrocarbon radical having from 6 to 44 carbon atoms, or a mixture of two or more thereof.

8. Stabiliser composition according to any one of claims I to 7, **characterised in that** it comprises at least one further additive.

9. Polymer composition, at least comprising a halogenated polymer and a stabiliser composition according to any one of claims 1 to 8.

10. Polymer composition according to claim 9, **characterised in that** it comprises a stabiliser composition according to any one of claims 1 to 8 in an amount of from 0.1 to 10 % by weight.

11. Use of a stabiliser composition according to any one of claims 1 to 8 or a polymer composition according to either one of claims 9 or 10 in the production of polymeric moulded articles or surface-coating media.

12. Method of stabilising halogen-containing polymers in which a halogen-containing polymer or a mixture of two or more halogen-containing polymers or a mixture of one or more halogen-containing polymers and one or more halogen-free polymers is mixed with a stabiliser composition according to any one of claims 1 to 8.

13. Moulded article, at least comprising a stabiliser composition according to any one of claims 1 to 8 or a polymer composition according to either one of claims 9 or 10.
